# EUROPÄISCHE PATENTSCHRIFT

(11) **EP 0 562 662 B1**
(45) Veröffentlichungstag und Bekanntmachung des Hinweises auf die Patenterteilung: **21.05.1997**
(21) Anmeldenummer: 93200722.2
(22) Anmeldetag: 12.03.1993
(51) Int. Cl.: H02M 3/28, H02M 7/08, H02M 1/00

(54) **Wechselstrom/Gleichstom-Wandler**
AC/DC converter
Convertisseur courant alternatif/courant continu

(30) Priorität: 27.03.1992 CH 991/92
(43) Veröffentlichungstag der Anmeldung: 29.09.1993
(73) Patentinhaber: Ascom FRAKO GmbH, 79331 Teningen (DE)
(72) Erfinder: Ridley, Ray, Dr., Battle Creek, MI 49017 (US); Kern, Siegfried, Dipl.-Ing., W-7838 Freiamt (DE)
(74) Vertreter: AMMANN PATENTANWAELTE AG BERN

(56) Entgegenhaltungen:
- US-A- 4 680 689
- US-A- 5 003 453

## Beschreibung

Die Erfindung betrifft einen Wechselstrom/Gleichstrom-Wandler zum Anschluss an die Leitungen eines Mehrphasen-Wechselstrom-Gebers entsprechend dem Oberbegriff von Anspruch 1. Er betrifft weiter ein Verfahren zu dessen Betrieb.

Wechselstrom/Gleichstrom-Wandler zum Anschluss an ein Mehrphasen-Wechselstrom-Netz sind bekannt. So zeigt beispielsweise die Schrift US 5,045,991 einen Wandler, der mit Hilfe eines 6-pulsigen, gesteuerten Brückengleichrichters einen 3-phasigen Wechselstrom gleichrichtet.

Die Schrift DE 37 38 181 A1 zeigt ähnlich der erstgenannten Schrift einen netzgeführten Stromrichter, dessen Ausgangsgleichstrom durch ständiges, phasenrichtiges Schalten von sechs Brückengleichrichter-Elementen gesteuert wird. Die Unterschiede der Einrichtungen der beiden Schriften liegen in den Steuerlogiken, wobei insbesondere die Anordnung der erstgenannten Schrift bei variierender Belastung das Wechselstromnetz in gewisser Annäherung stets sinusförmig belastet.

Aus der Schrift US 4,680,689 ist ein redundant aufgebauter Wechselstrom/Gleichstrom-Wandler bekannt. Dieser Wandler weist drei Brückengleichrichter auf, die an die verschiedenen Phasen eines Drehstromnetzes angeschlossen sind. Diesen Gleichrichtern sind jeweils ein pulsweitenmodulierter Gleichstrom/Gleichstrom-Wandler mit galvanischer Trennung nachgeschaltet. Diese DC/DC-Wandler arbeiten parallel und speisen gemeinsam einen Verbraucher variabler Leistung. Bei Ausfall einer Netzphase oder eines der DC/DC-Wandler übernehmen die verbleibenden Einheiten die Speisung unterbruchfrei.

Die Schrift US 5,003,453 zeigt einen weiteren Wechselstrom/Gleichstrom-Wandler mit ausgeglichener Belastung der drei Phasen eines Drehstromnetzes. Dieser Wandler speist in einer Version mit allen drei Phasen und in einer anderen Version mit jeweils einer einzigen der drei Phasen des Netzes drei parallele Leistungsfaktorkorrektur-Schaltungen. Diese liefern an ihren Ausgängen Gleichstrom, der durch nachgeschaltete Gleichstrom/Gleichstrom-Wandler für die verschiedenen Verbraucher in einer Computer-Anlage weitergewandelt wird. Der Wechselstrom/Gleichstrom-Wandler ist mehrfach redundant ausgelegt und in der Lage, auch bei Ausfall einer Netzphase, einer der Leistungsfaktorkorrektur-Schaltungen oder eines Gleichstrom/Gleichstrom-Wandlers den vom Computer benötigten Strom zu liefern. Dieser Wechselstrom/Gleichstrom-Wandler ist recht aufwendig und speziell ausgebildet zum Speisen der diversen Verbraucher in einem Grosscomputer, wobei der Computer auch bei Wartungsarbeiten am Wandler nicht unterbrochen wird.

Ausgehend von diesem Stand der Technik ist es die Aufgabe der Erfindung, einen verbesserten, redundanten Wechselstrom/Gleichstrom-Wandler anzugeben, der im Aufbau einfach ist, der das speisende Netz stets im wesentlichen ohne nichtlineare Verzerrungen belastet, und der auch bei erheblichen Störungen die gewünschte Stromversorgung sicherstellt. Weiter soll er bezüglich seiner Ausgangswerte flexibel sein.

Die Lösung dieser Aufgabe ist durch den kennzeichnenden Teil der unabhängigen Ansprüche gegeben. Die abhängigen Ansprüche zeigen Weiterbildungen der Erfindung.

Im folgenden wird die Erfindung beispielsweise anhand von vier Figuren näher beschrieben. Es zeigen:
Fig. 1 - Blockschaltbild eines Wechselstrom/Gleichstrom-Wandlers zum Anschluss an ein Dreiphasen-Netz.
Fig. 2 - erste Variante einer Gleichrichterschaltung
Fig. 3 - zweite Variante einer Gleichrichterschaltung
Fig. 4 - Blockschaltbild einer Überwachungsanordnung

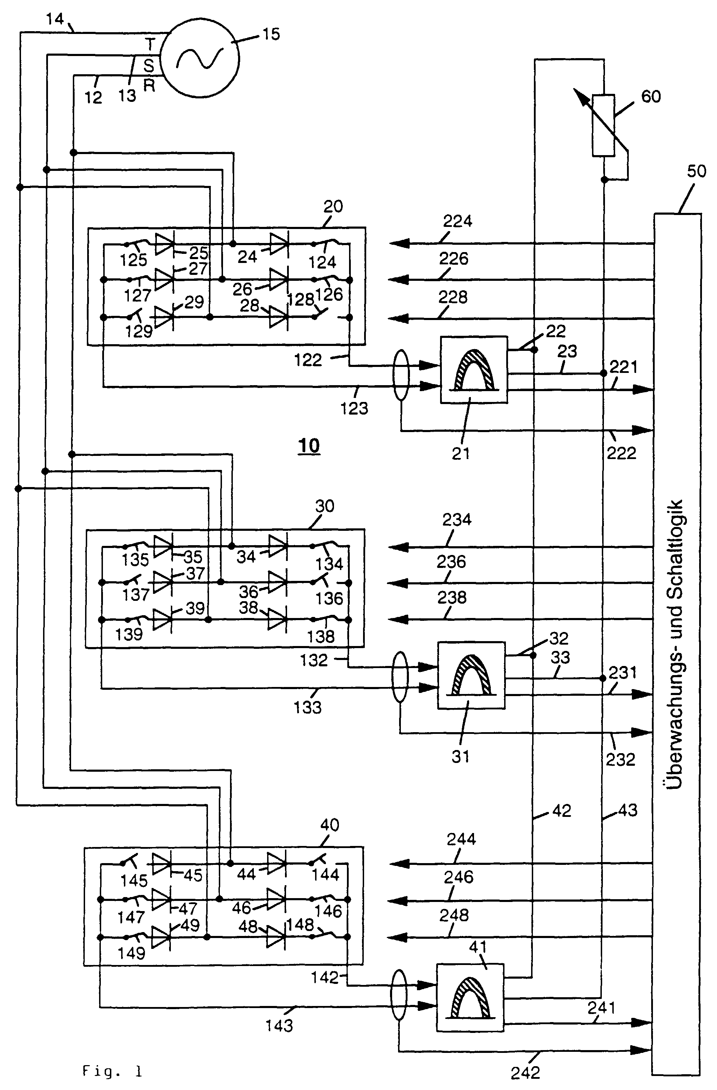

Fig. 1 zeigt ein Blockschaltbild eines Wechselstrom/Gleichstrom-Wandlers 10. Dieser Wandler 10 ist an die drei Leitungen 12, 13, 14 eines Dreiphasen-Netzes angeschlossen, das durch einen Generator bzw. Geber 15 dargestellt ist. Jede der drei Leitungen 12, 13, 14 führt eine Phase R, S, T eines Dreiphasen- bzw. Drehstromes. Ein Null- oder Masse-Leiter ist nicht notwendig und daher nicht vorgesehen.

An die Leitungen 12, 13, 14 sind primär und parallel zueinander drei Gleichrichtgerschaltungen 20, 30, 40 angeschlossen. Jeder Gleichrichterschaltung ist eine zugeordnete Einphasen-Leistungsfaktorkorrektur-Einheit 21, 31 bzw. 41 nachgeschaltet, deren Ausgänge 22, 23; 32, 33; 42, 43 gemeinsam mit einer variablen Last 60, als ohmscher Widerstand dargestellt, verbunden sind. Der Wechselstrom/Gleichstrom-Wandler 10 umfasst weiter eine Überwachungs- und Schalt-Logik 50, die mit den Gleichrichterschaltungen 20, 30, 40 und den Leistungsfaktorkorrektur-Einheiten 21, 31, 41 verbunden ist.

Die drei Gleichrichterschaltungen 20, 30, 40 sind gleich aufgebaut und umfassen jeweils sechs Gleichrichter, dargestellt als sechs Dioden 24-29, 34-39 bzw. 44-49, denen jeweils ein Schalter 124-129, 134-139 bzw. 144-149 seriell zugeordnet ist. Die Dioden und Schalter jeder Gleichrichterschaltung 20, 30, 40 sind in Art eines 6-pulsigen, gesteuerten Brückengleichrichters paarweise an die Leitungen 12, 13 bzw. 14 und zu dritt jeweils an die Verbindungen 122, 123; 132, 133; 142, 143 zu den Leistungsfaktorkorrektur-Einheiten 21, 31, 41 angeschlossen.

Im Normalfall, d.h. im defektfreien Betrieb, sind in jeder Gleichrichterschaltung 20, 30, 40 die Schalter zweier Paare der Schalter 124-129, 134-139, 144-149 geschlossen, d.h. auf Stromdurchlass geschaltet, und die restlichen zwei Schalter offen, d.h. für den Stromdurchlass gesperrt. Hierbei ist die Auswahl der geöffneten und der geschlossenen Schalter so getroffen, dass in jeder Gleichrichterschaltung 20, 30, 40 eine andere der Leitungen 12, 13, 14 den offenen Schaltern zugeordnet ist. In Fig. 1 sind beispielsweise das Schalterpaar 128, 129 der Gleichrichterschaltung 20 offen und der Leitung 14 zugeordnet, das Schalterpaaar 136, 137 der Gleichrichterschaltung 30 offen und der Leitung 13 zugeordnet, und das Schalterpaar 144, 145 der Gleichrichterschaltung 40 offen und der Leitung 12 zugeordnet. Alle anderen Schalter sind geschlossen. Hierdurch bildet jede Gleichrichterschaltung 20, 30, 40 einen Einphasen-Brückengleichrichter, der einer der Phasen R, S, T des Dreiphasen-Wechselstromes zugeordnet ist. An den Verbindungen 122, 123; 132, 133; 142, 143 zu den Leistungssfaktorkorrektur-Schaltungen 21, 31, 41 stehen damit einphasige, gleichgerichtete, von einer quasi Sinuswelle abgeleitete Spannungen an.

Die drei Einphasen-Leistungsfaktorkorrektur-Einheiten 21, 31, 41 sind gleich und arbeiten unabhängig voneinander. Jede dieser Einheiten 21, 31, 41 liefert an ihren Ausgängen 22, 23; 32, 33; 42, 43 einen geregelten Gleichstrom bei einer beliebig einstellbaren Ausgangsspannung. Die Einheiten sind so ausgebildet, dass sie die an ihren Eingängen 122, 123; 132, 133; 142, 143 anliegende, beschriebene einphasig pulsierende Gleichrichter-Spannung weitgehend ohne nichtlineare Verzerrungen nutzt. Hierdurch erfolgt die Belastung des Gebers 15 bzw. des Wechselstromnetzes ähnlich wie durch eine ohmsche Last, so dass auf den Leitungen 12, 13, 14 im wesentlichen keine Oberwellen entstehen, die andere Geräte stören könnten. Eine solche Leistungsfaktorkorrektur-Einheit ist beispielsweise in der Europäischen Patentschrift 0 218 267 beschrieben.

Als weitere Eigenschaften der Einphasen-Leistungsfaktorkorrektur-Schaltungen 21, 31, 41 sind die galvanische Trennung zwischen ihren Ein- und Ausgängen und ihre Dimensionierung zu nennen. Die galvanische Trennung erlaubt das beschriebene Zusammenschalten der Ausgänge 22, 23; 32, 33; 42, 43 auf einem beliebigen Potential. Die Dimensionierung kann so vorgenommen sein, dass jeweils zwei der insgesamt drei Einheiten 21, 31, 41 die geforderte Maximalleistung gemeinsam zu liefern in der Lage sind. Hierdurch ergibt sich beim Ausfall einer der Einheiten 21, 31, 41 kein Lieferdefizit beim Verbraucher bzw. der Last 60.

Die Überwachungs- und Schalt-Logik 50 steuert über zugeordnete Steuerleitungen 224, 226, 228, 234, 236, 238, 244, 246, 248 die Schalter 124-129, 134-139, 144-149 der Gleichrichterschaltungen 20, 30, 40 gemeinsam und paarweise in den Sperr- oder Offenzustand. Die Steuerinformation kommt über zugeordnete Signalleitungen 222, 232, 242 beispielsweise von den Verbindungen 122, 123; 132, 133; 142, 143 und über die Leitungen 221, 231, 241 von den Leistungsfaktorkorrektur-Einheiten 21, 31, 41.

Der Wechselstrom/Gleichstrom-Wandler 10 arbeitet wie folgt: Im defektfreien, normalen Zustand richtet jede Gleichrichterschaltung 20, 30, 40 als vierpoliger Brückengleichrichter einen Wechselstrom gleich, der sinusförmig ist und durch Verkettung der Phasen R, S, T des Dreiphasen-Wechselstromes entsprechend einer Dreieck- oder Deltaschaltung entsteht. Hierbei ist keinerlei Schalten der Schalter 124-129, 134-139, 144-149 notwendig. Diese verharren vielmehr in ihrer beschriebenen Normal-Schaltstellung. Die nachgeschalteten Leistungsfaktorkorrektur-Einheiten 21, 31, 41 erzeugen aus dem jeweils entstehenden, einphasig pulsierenden Gleichrichterstrom einen geregelten Gleichstrom hoher Güte, wobei sie die jeweils erforderliche Verbraucher-Leistung im wesentlichen zu gleichen Teilen liefern.

Fällt eine der Leistungsfaktorkorrektur-Einheiten 21, 31, 41 aus irgendeinem Grund aus, dann wird dies über die jeweils zugeordnete Signalleitung 221, 231, 241 der Überwachungs- und Schaltlogik 50 gemeldet. Diese sperrt hierauf sämtliche Schalter der zugeordneten Gleichrichterschaltung 20, 30, 40 und trennt hierdurch den betroffenen Zweig des Wandlers 10 vom Geber 15 bzw. dem Netz. Die verbleibenden zwei Leistungsfaktorkorrektur-Einheiten 21, 31, 41 erhöhen nun automatisch ihre Leistungsabgabe, wodurch die Last 60 unverändert mit Strom versorgt wird.

Fällt eine der Phasen R, S, T des Gebers 15 aus, dann wird dies der Überwachungs- und Schalt-Logik 50 über wenigstens eine der Signalleitungen 222, 232, 242 gemeldet. Die Logik 50 schaltet hierauf die bisher offenen Schalter aller drei Gleichrichterschaltungen 20, 30, 40 ein und ermöglicht hierdurch einen Notbetrieb. Die zwischen den Leitungen 12, 13, 14 verbleibenden Spannungen sind hierbei weiterhin im wesentlichen sinusförmig, so dass alle Gleichrichterschaltungen 20, 30, 40 und die nachgeschalteten Leistungsfaktorkorrektur-Einheiten 21, 31, 41 im wesentlichen unverändert weiterarbeiten. Die Gleichrichterdioden sorgen dabei für die notwendigen Entkopplungen. Zur Verbesserung der Entkopplungen kann jedoch auch vorgesehen sein, dass die Logik 50 diejenigen Schalter öffnet, die der ausgefallenen Phase R, S, T zugeordnet sind.

Der Wechselstrom/Gleichstrom-Wandler 10 besitzt durch den beschriebenen Aufbau in verschiedener Hinsicht Redundanz, die in Störungsfällen einfach und so nutzbar ist, dass eine weitgehend sichere Stromversorgung des Verbrauchers 60 gewährleistet werden kann.

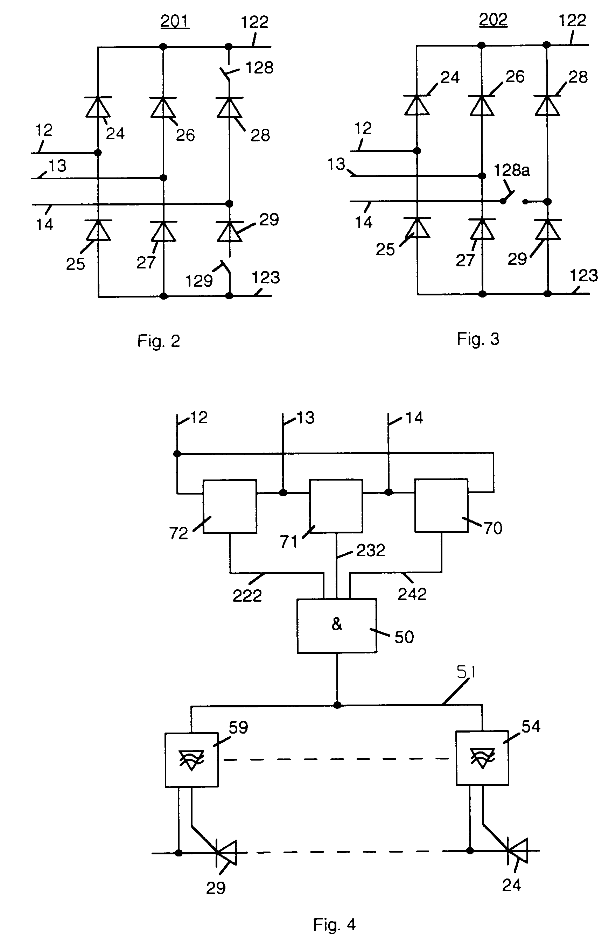

Im weiteren werden Varianten des erfindungsgemässen Wechselstrom/Gleichstrom-Wandlers 10 beschrieben. Fig. 2 zeigt hierzu eine gegen die Gleichrichterschaltungen 20, 30, 40 austauschbare erste Variantenschaltung 201. Diese Schaltung 201 weist wie beschrieben sechs Dioden 24-29 auf, jedoch nur zwei Schalter 128, 129 die dem Diodenpaar 28, 29 zugeordnet sind. Diese Schalter, im Beispiel zugeordnet der Leitung 14, sind im störungsfreien Normalbetrieb offen und werden beim Ausfall einer der Phasen R, S, T eingeschaltet.

Fig. 3 zeigt eine weitere Variantenschaltung 202 für die Gleichrichterschaltungen, die nur einen einzigen Schalter 128a aufweist. Dieser Schalter 128a ist den Dioden 28, 29 zugeordnet und in die Leitung 14 eingefügt. Er ersetzt funktionsmässig die beiden Schalter 128, 129 der Variante entsprechend Fig. 2.

Als Schalter 124-129, 134-139, 144-149, 128a können grundsätzlich elektromechanische Schalter dienen, z.B. die Kontakte von Relais oder Schützen, da die Schalter sehr selten geschaltet werden und keine speziellen Anforderungen an die eigentlichen Schaltvorgänge bestehen, z.B. die Forderung, dass nur im spannungsfreien Zustand geschaltet werden darf. In bevorzugter Ausbildung sind jedoch gesteuerte Halbleiterschalter vorzusehen, beispielsweise Thyristoren oder Triacs, wobei insbesondere die Gleichrichterfunktion der Dioden und die Schaltfunktion der Schalter in jeweils einem einzigen Element kombinierbar sind. Hierbei ist zu beachten, dass die Schalter entsprechend Fig. 1 und 2 unipolar ausgebildet sein können. Der Schalter 128a von Fig. 3 muss dagegen ein Bipolar-Schalter sein.

Fig. 4 zeigt als Blockschaltbild eine einfache Überwachung der Phasen R, S, T eines Dreiphasen-Wechselstrom-Gebers 15 sowie der zugeordneten Schaltlogik 50. Als Sensoren dienen drei Spannungssüberwachungen 70, 71, 72, die dreieckförmig an die Leitungen 12, 13, 14 angeschlossen sind. Als Logik 50 dient ein logisches UND mit negiertem Ausgang 51. An diesen Ausgang lassen sich über Verstärker 54, 59 direkt Thyristoren ansteuern, die die Schalter 24-29 verkörpern.

Als Leistungsfaktorkorrektur-Einheiten 21, 31, 41 lassen sich grundsätzlich beliebige Wandler einsetzen, die aus einem gleichgerichteten Sinus-Wechselstrom einen Gleichstrom erzeugen, wobei auf den Geber 15 keine nichtlinearen Verzerrungen rückwirken dürfen und bevorzugt eine Potentialtrennung erfolgt. Ein solcher bekannter Wandler wurde genannt (EP 0 218 267), wobei die Potentialtrennung durch einen gesteuerten Brückenschalter mit nachfolgendem Transformator und Gleichrichter erfolgen kann. Von Vorteil ist es, wenn die Leistungsfaktorkorrektur-Einheiten 21, 31, 41 als kombinierte Hochsteller/Abwärtssteller (boost/buck) ausgebildet sind, da hierdurch die Flexibilität bezüglich des Verhältnisses der Eingangsspannungen, d.h. den Spannungen zwischen den Leitern 12, 13, 14, und der Ausgangsspannung, d.h. der Spannung an den Ausgängen 22, 23; 32, 33; 42, 43 sehr gross gemacht werden kann.

Die Ausgänge der Leistungsfaktorkorrektur-Einheiten 21, 31, 41 können bei einer Potentialtrennung gemeinsam auf eine einzige Last 60 wirken. Es ist jedoch auch möglich, jeder dieser Einheiten 21, 31, 41 eine separate Last nachzuschalten, die nicht notwendig gleich sein müssen.

Der Wechselstrom/Gleichstrom-Wandler 10 ist im Aufbau relativ einfach und robust. Zu seinem Anschluss an den Geber 15 bzw. an ein Wechselstromnetz sind weder eine Null- noch eine Masseleitung erforderlich. Der Wandler ist flexibel und an vielerlei Spezialfälle anpassbar. Er weist sehr gute Redundanz-Eigenschaften auf und genügt dadurch hohen Anforderungen an die Ausfallsicherheit. Seine beschriebenen Schalter unterliegen keiner Dauerbeanspruchung, da sie nur im Störungsfall, also sehr selten, betätigt werden. Der Wandler 10 bildet damit eine vergleichsweise sehr gebrauchstüchtige Einrichtung für den universellen Einsatz.

## Patentansprüche

1. Wechselstrom/Gleichstrom-Wandler (10) zum Anschluss an die Leitungen (12, 13, 14) eines Dreiphasen-Wechselstrom-Gebers (bzw. Netzes) (15), der den Wechselstrom-Geber (15) im wesentlichen ohne nichtlineare Verzerrungen belastet, und der drei von einander unabhängige, gleiche Brückengleichrichterschaltungen (20, 30, 40) umfasst, die an den Wechselstrom-Geber (15) angeschlossen sind und denen jeweils ein Gleichstrom/Gleichstrom-Wandler (21, 31, 41) nachgeschaltet ist,
dadurch gekennzeichnet
- dass jede der Gleichrichterschaltungen (20, 30, 40) sechs Gleichrichter-Elemente (24-29; 34-39; 44-49) umfasst, die jeweils paarweise mit den drei Leitungen (12, 13, 14) des Gebers (15) und die unter Bildung von Brücken gemeinsam mit den jeweils zugeordneten Verbindungen (122, 123; 132, 133; 142, 143) zu den Wandlern (21, 22, 23) verbunden sind,
- dass pro Gleichrichterschaltung (20, 30, 40) wenigstens ein Schalter (124-129; 134-139; 144-149) vorgesehen ist, welcher Schalter oder welche Schalter wenigstens einem Paar der Gleichrichter-Elemente (24-29; 34-39; 44-49) zugeordnet und ausgebildet ist bzw. sind zum Trennen des jeweils zugeordneten Paares von der diesem Paar zugeordneten Leitung (12, 13, 14) des Gebers (15),
- dass die Gleichstrom/Gleichstrom-Wandler (21, 31, 41) als Einphasen-Leistungsfaktorkorrektur-Schaltung ausgebildet sind,
- dass Sensoren für die Funktionsüberwachung der Phasen (R, S, T) des Gebers (15) und der Einphasen-Leistungsfaktorkorrektur-Schaltungen (21, 31, 41) vorgesehen sind, und
- dass eine Überwachungs- und Schaltlogik (50) vorgesehen ist, die mit den genannten Sensoren über Leitungen (221, 222, 231, 232, 241, 242) verbunden ist, und die aufgrund der Signale der Sensoren die Schalter der Gleichrichterschaltungen (20, 30, 40) ein- oder ausschaltet.

2. Wechselstrom/Gleichstrom-Wandler (10) nach Anspruch 1,
dadurch gekennzeichnet,
dass der Dreiphasen-Wechselstrom-Geber bzw. das Netz (15) ausschliesslich drei Phasenleitungen (12, 13, 14) und keinen Null- und keinen Masse-Leiter aufweist.

3. Wechselstrom/Gleichstrom-Wandler (10) nach Anspruch 1,
dadurch gekennzeichnet,
dass pro Gleichrichterschaltung (20, 30, 40) ein einziger Schalter (128a) vorgesehen ist, der in eine jeweilige Verbindung zwischen einem der Paare von Gleichrichter-Elementen (24-29; 34-39; 44-49) und der zugeordneten Leitung (12, 13, 14) des Mehrphasen-Wechselstrom-Gebers (15) eingefügt ist,
wobei in jeder Gleichrichterschaltung (20, 30, 40) der jeweilige Schalter in die Verbindung zu einer anderen der Leitungen (12, 13, 14) eingefügt ist.

4. Wechselstrom/Gleichstrom-Wandler (10) nach Anspruch 1,
dadurch gekennzeichnet,
das pro Gleichrichterschaltung (20, 30, 40) zwei Schalter (128, 129) vorgesehen sind, die in Reihe mit den beiden Gleichrichter-Elementen (28, 29) eines jeweiligen Paares geschaltet sind, wobei in jeder Gleichrichterschaltung (20, 30, 40) die jeweiligen Schalter und Gleichrichter-Elemente einer anderen der Leitungen (12, 13, 14) des Mehrphasen-Wechselstrom-Gebers (15) zugeordnet sind.

5. Wechselstrom/Gleichstrom-Wandler (10) nach Anspruch 1,
dadurch gekennzeichnet,
dass pro Gleichrichterschaltung (20, 30, 40) sechs Schalter (124-129; 134-139; 144-149) vorgesehen sind, die einzeln und in Reihe mit den sechs Gleichrichter-Elementen (24-29; 34-39; 44-49) der jeweiligen Gleichrichterschaltung (20, 30, 40) geschaltet sind.

6. Wechselstrom/Gleichstrom-Wandler (10) nach Anspruch 1,
dadurch gekennzeichnet,
dass die Schalter (124-129; 134-139; 144-149) als elektrisch steuerbare Halbleiterschalter ausgebildet sind.

7. Wechselstrom/Gleichstrom-Wandler (10) nach Anspruch 1,
dadurch gekennzeichnet,
dass jeder Schalter (124-129; 134-139; 144-149) zusammen mit dem zugeordneten Gleichrichter-Element (24-29; 34-39; 44-49) eine gemeinsame, elektrisch steuerbare Einheit bildet.

8. Wechselstrom/Gleichstrom-Wandler (10) nach Anspruch 1,
dadurch gekennzeichnet,
dass jeder Einphasen-Leistungskorrektur-Schaltung (21, 31, 41) eine separate Last nachgeschaltet ist.

9. Wechselstrom/Gleichstrom-Wandler (10) nach Anspruch 1,
dadurch gekennzeichnet,
das jede Einphasen-Leistungskorrektur-Schaltung (21, 31, 41) als Konverter mit galvanischer Trennung ausgebildet ist, und dass diesen Konvertern eine gemeinsame Last (60) nachgeschaltet ist.

10. Wechselstrom/Gleichstrom-Wandler (10) nach Anspruch 9,
dadurch gekennzeichnet,
dass die Konverter so ausgebildet sind, dass zwei ausreichen zum Speisen der gemeinsamen Last (60).

11. Verfahren zum Betrieb eines Wechselstrom/Gleichstrom-Wandlers (10) entsprechend Anspruch 3,
dadurch gekennzeichnet,
dass bei störungsfreiem Betrieb in jeder Gleichrichterschaltung (20, 30, 40) der jeweilige Schalter (128a) offen ist und
dass bei Ausfall einer der Phasen (R, S, T) des Mehrphasen-Wechselstrom-Gebers (15) alle Schalter (128a) für die Dauer des Ausfalls geschlossen werden.

12. Verfahren zum Betrieb eines Wechselstrom/Gleichstrom-Wandlers (19) entsprechend Anspruch 4,
dadurch gekennzeichnet,
dass bei störungsfreiem Betrieb in jeder Gleichrichterschaltung (20, 30, 40) die jeweiligen Schalter (128, 129) offen sind, und
dass bei Ausfall einer der Phasen (R, S, T) des Mehrphasen-Wechselstrom-Gebers (15) alle Schalter (128, 129) für die Dauer des Ausfalls geschlossen werden.

13. Verfahren zum Betrieb eines Wechselstrom/Gleichstrom-Wandlers (19) entsprechend Anspruch 5,
dadurch gekennzeichnet,
- dass bei störungsfreiem Betrieb des Wandlers (10) in jeder Gleichrichterschaltung (20, 30, 40) vier der Schalter (124-127; 134, 135, 138, 139; 146-149), die zwei Paaren der Gleichrichter-Elemente (24-27; 34, 35, 38, 39; 46-49) zugeordnet sind, geschlossen sind, und zwei der Schalter (128, 129; 136, 137; 144, 145), die dem dritten Paar der Gleichrichter-Elemente (28, 29; 36, 37; 44, 45) zugeordnet sind, geöffnet sind, wobei in jeder Gleichrichterschaltung (20, 30, 40) die jeweiligen geöffneten Schalter (128, 129; 136, 137; 144, 145) und die zugeordneten Gleichrichter-Elemente (28, 29; 36, 37; 44, 45) einer anderen der Leitungen (12, 13, 14) des Mehrphasen-Wechselstrom-Gebers (15) zugeordnet sind, und
dass bei Ausfall einer der Phasen (R, S, T) des Mehrphasen-Wechselstrom-Gebers (15) alle im störungsfreien Betrieb offenen Schalter (128, 129; 136, 137; 144, 145) für die Dauer des Ausfalls geschlossen werden.

14. Verfahren nach Anspruch 13,
dadurch gekennzeichnet,
dass bei Ausfall einer der Phasen (R, S, T) zusätzlich alle diejenigen Schalter geöffnet werden, die derjenigen Leitung (12, 13, 14) zugeordnet sind, die der ausgefallenen Phase (R, S, T) entspricht.

15. Verfahren nach Anspruch 13,
dadurch gekennzeichnet,
dass bei Ausfall einer der Einphasen-Leistungsfaktorkorrektur-Einheiten (21, 31, 41) für die Dauer des Ausfalls alle Schalter (124-129; 134-139; 144-149) derjenigen Gleichrichterschaltung (20, 30, 40) geöffnet werden, die der ausgefallenen Leistungsfaktorkorrektur-Einheit (21, 31, 41) vorgeschaltet ist.

## Claims

1. An A.C.-D.C. converter (10) which is intended to be connected to the conductors (12, 13, 14) of a three-phase A.C. power supply (resp. mains (15) and whose load on said A.C. power supply (15) is essentially free of nonlinear distortions, said A.C.-D.C. converter comprising three mutually independent, identical bridge rectifier circuits (20, 30, 40) which are connected to said A.C. power supply (15) and each of which is followed by a D.C.-D.C. converter (21, 31, 41),
characterised in that
- each one of said rectifier circuits (20, 30, 40) includes six rectifier elements (24-29; 34-39; 44-49), respective pairs of which are connected to the three conductors (12, 13, 14) of said power supply (15), said pairs forming bridges which are connected in common to the respective associated connections (122, 123; 132, 133; 142, 143) to said converters (21, 22, 23),
- at least one switch (124-129; 134-139; 144-149) per rectifier circuit (20, 30, 40) is provided, said switch or switches being associated to at least one of said pairs of rectifier elements (24-29; 34-39; 44-49) and adapted to disconnect the respective associated pair from the conductor (12, 13, 14) of the power supply (15) which is associated to that pair,
- the D.C.-D.C. converters (21, 31, 41) are in the form of single-phase power factor correction circuits,
- sensors are provided in order to monitor the operation of the phases (R, S, T) of said power supply (15) and that of said single-phase power factor correction circuits (21, 31, 41), and in that
- a logic monitoring and switching system (50) is provided which is connected to said sensors by lines (221, 222, 231, 232, 241, 242) and which switches said switches of the rectifier circuits (20, 30, 40) on and off according to the signals from said sensors.

2. A.C.-D.C. converter (10) according to claim 1, characterised in that said three-phase A.C. power supply resp. network (15) comprises three phase conductors (12, 13, 14) exclusively, and no neutral and no earth conductor.

3. A.C.-D.C. converter (10) according to claim 1, characterised in that a single switch (128a) per rectifier circuit (20, 30, 40) is provided which is inserted in a respective connection between one of the pairs of rectifier elements (24-29; 34-39; 44-49) and the associated conductor (12, 13, 14) of the multiphase A.C. power supply (15), the respective switch of each rectifier circuit (20, 30, 40) being inserted in the connection of a different one of said conductors (12, 13, 14).

4. A.C.-D.C. converter (10) according to claim 1, characterised in that two switches (128, 129) per rectifier circuit (20, 30, 40) are provided which are connected in series to the two rectifier elements (28, 29) of a respective pair, the respective switches and rectifier elements of each rectifier circuit (20, 30, 40) being associated to a different one of the conductors (12, 13, 14) of the multiphase A.C. power supply (15).

5. A.C.-D.C. converter (10) according to claim 1, characterised in that six switches (124-129; 134-139; 144-149) per rectifier circuit (20, 30, 40) are provided which are individually connected in series to the six rectifier elements (24-29; 34-39; 44-49) of the respective rectifier circuit (20, 30, 40).

6. A.C.-D.C. converter (10) according to claim 1, characterised in that said switches (124-129; 134-139; 144-149) are in the form of electrically controllable semiconductor switches.

7. A.C.-D.C. converter (10) according to claim 1, characterised in that each one of said switches (124-129; 134-139; 144-149) forms a common, electrically controllable unit with the associated rectifier element (24-29; 34-39; 44-49).

8. A.C.-D.C. converter (10) according to claim 1, characterised in that each one of said single-phase power factor correction circuits (21, 31, 41) is followed by a separate load.

9. A.C.-D.C. converter (10) according to claim 1, characterised in that each one of said single-phase power correction circuits (21, 31, 41) is in the form of an electrically isolated converter, and in that said converters are followed by a common load.

10. A.C.-D.C. converter (10) according to claim 9, characterised in that said converters are so designed that two of them are sufficient to feed said common load (60).

11. Method for the operation of an A.C.-D.C. converter (10) according to claim 3, characterised in that in troublefree operation, the respective switch (128a) of each rectifier circuit (20, 30, 40) is open, and that in the case of a failure of one of the phases (R, S, T) of the multiphase A.C. power supply (15), all switches (128a) are closed for the time of said failure.

12. Method for the operation of an A.C.-D.C. converter (19) according to claim 4, characterised in that in troublefree operation, the respective switches (128, 129) of each rectifier circuit (20, 30, 40) are open, and that in the case of a failure of one of the phases (R, S, T) of the multiphase A.C. power supply (15), all switches (128, 129) are closed for the time of said failure.

13. Method for the operation of an A.C.-D.C. converter (19) according to claim 5, characterised in that in troublefree operation of the converter (10), in each one of said rectifier circuits (20, 30, 40), four of said switches (124-127; 134, 135, 138, 139; 146-149), which are associated to two pairs of rectifier elements (24-27; 34, 35, 38, 39; 46-49), are closed, and two switches (128, 129; 136, 137; 144, 145), which are associated to the third pair of rectifier elements (28, 29; 36, 37; 44, 45), are open, the respective open switches (128, 129; 136, 137; 144, 145) and the associated rectifier elements (28, 29; 36, 37; 44, 45) of each rectifier circuit (20, 30, 40) being associated to a different one of the conductors (12, 13, 14) of the multiphase A.C. power supply (15), and that in the case of a failure of one of the phases (R, S, T) of the multiphase A.C. power supply (15), all switches (128, 129; 136, 137; 144, 145) which are open in troublefree operation are closed for the time of said failure.

14. Method according to claim 13, characterised in that in the case of a failure of one of the phases (R, S, T), all those switches associated to the conductor which corresponds to the defective phase (R, S, T) are additionally opened.

15. Method according to claim 13, characterised in that in the case of a failure of one of the single-phase power factor correction units (21, 31, 41), all switches (124-129; 134-139; 144-149) of the rectifier circuit (20, 30, 40) which precedes the defective power correction unit (21, 31, 41) are opened for the time of said failure.

## Revendications

1. Convertisseur C.A./C.C. (10) pour connexion aux conducteurs (12, 13, 14) d'une source (ou d'un réseau) de courant triphasé (15), ledit convertisseur constituant une charge essentiellement libre en distortions non linéaires de ladite source de courant alternatif (15) et comprenant trois circuits redresseurs à pont (20, 30, 40) identiques et mutuellement indépendants qui sont reliés à ladite source de courant alternatif (15) et suivis chacun d'un convertisseur à courant continu (21, 31, 41),
caractérisé en ce que
- chacun des circuits redresseurs (20, 30, 40) comprend six éléments redresseurs (24-29; 34-39; 44-49) dont une paire est chaque fois reliée à l'un des trois conducteurs (12, 13, 14) de ladite source de courant (15), ces dernières étant reliées conjointement, en formant des ponts, aux connexions associées (122, 123; 132, 133; 142, 143) des convertisseurs (21, 22, 23),
- qu'au moins un commutateur (124-129; 134-139; 144-149) par circuit redresseur (20, 30, 40) est prévu, ledit ou lesdits commutateur(s) étant associé(s) à au moins une paire desdits éléments redresseurs (24-29; 34-39; 44-49) et apte(s) à déconnecter la paire y associée du conducteur (12, 13, 14) de la source de courant (15) associé à cette paire,
- que les convertisseurs à courant continu (21, 31, 41) sont réalisés sous forme de circuits de correction du facteur de puissance monophasés,
- que des détecteurs sont prévus pour la surveillance du fonctionnement des phases (R, S, T) de la source de courant (15) et des circuits de correction du facteur de puissance monophasés (21, 31, 41), et
- qu'une logique (50) de surveillance et de commutation est prévue qui est reliée auxdits détecteurs par des lignes (221, 222, 231, 232, 241, 242) et met en contact ou hors de contact lesdits commutateurs des circuits redresseurs (20, 30, 40) sur la base des signaux des détecteurs.

2. Convertisseur C.A./C.C. (10) selon la revendication 1, caractérisé en ce que ladite source resp. ledit réseau (15) de courant triphasé présente exclusivement trois conducteurs de phase (12, 13, 14) et aucun conducteur neutre ni de mise à la masse.

3. Convertisseur C.A./C.C. (10) selon la revendication 1, caractérisé en ce que par circuit redresseur (20, 30, 40) est prévu un seul commutateur (128a) qui est incorporé chaque fois dans la connexion entre l'une des paires d'éléments redresseurs (24-29; 34-39; 44-49) et le conducteur associé (12, 13, 14) de la source (15) de courant multiphasé, le commutateur correspondant de chaque circuit redresseur (20, 30, 40) étant incorporé dans la connexion d'un conducteur (12, 13, 14) différent.

4. Convertisseur C.A./C.C. (10) selon la revendication 1, caractérisé en ce que par circuit redresseur (20, 30, 40) sont prévus deux commutateurs (128, 129) qui sont chaque fois connectés en série aux deux éléments redresseurs (28, 29) d'une paire, les commutateurs et éléments redresseurs de chaque circuit redresseur (20, 30, 40) étant associés à un conducteur (12, 13, 14) différent de la source (15) de courant multiphasé.

5. Convertisseur C.A./C.C. (10) selon la revendication 1, caractérisé en ce que par circuit redresseur (20, 30, 40) sont prévus six commutateurs (124-129; 134-139; 144-149) qui sont individuellement connectés en série aux six éléments redresseurs (24-29; 34-39; 44-49) du circuit redresseur (20, 30, 40) correspondant.

6. Convertisseur C.A./C.C. (10) selon la revendication 1, caractérisé en ce que les commutateurs (124-129; 134-139; 144-149) sont réalisés sous forme de commutateurs semiconducteurs capables d'être commandés par voie électrique.

7. Convertisseur C.A./C.C. (10) selon la revendication 1, caractérisé en ce que chaque commutateur (124-129; 134-139; 144-149) forme, avec l'élément redresseur (24-29; 34-39; 44-49) y associé, une unité capable d'être commandée par voie électrique .

8. Convertisseur C.A./C.C. (10) selon la revendication 1, caractérisé en ce que chaque circuit de correction du facteur de puissance monophasé (21, 31, 41) est suivi par une charge séparée.

9. Convertisseur C.A./C.C. (10) selon la revendication 1, caractérisé en ce que chaque circuit de correction du facteur de puissance monophasé (21, 31, 41) est réalisé sous forme d'un convertisseur électriquement isolé, et que ces convertisseurs sont suivis par une charge commune (60).

10. Convertisseur C.A./C.C. (10) selon la revendication 9, caractérisé en ce que lesdits convertisseurs sont réalisés de telle manière que deux en suffisent pour alimenter la charge commune (60).

11. Procédé pour la mise en oeuvre d'un convertisseur C.A./C.C. (10) selon la revendication 3, caractérisé en ce qu'en cas d'absence de dérangements, le commutateur correspondant (128a) de chaque circuit redresseur (20, 30, 40) est ouvert, et qu'en cas de défaillance d'une des phases (R, S, T) de la source (15) de courant multiphasé, tous les commutateurs (128a) sont fermés pour la durée de ladite défaillance.

12. Procédé pour la mise en oeuvre d'un convertisseur C.A./C.C. (19) selon la revendication 4, caractérisé en ce qu'en cas d'absence de dérangements, les commutateurs (128, 129) correspondants de chaque circuit redresseur (20, 30, 40) sont ouverts, et qu'en cas de défaillance d'une des phases (R, S, T) de la source (15) de courant multiphasé, tous les commutateurs (128, 129) sont fermés pour la durée de ladite défaillance.

13. Procédé pour la mise en oeuvre d'un convertisseur C.A./C.C. (19) selon la revendication 5, caractérisé en ce qu'en cas d'absence de dérangements du convertisseur (10), dans chacun des circuits redresseurs (20, 30, 40), quatre des commutateurs (124-127; 134, 135, 138, 139; 146-149), associés à deux paires d'éléments redresseurs (24-27; 34, 35, 38, 39; 46-49), sont fermés et deux des commutateurs (128, 129; 136, 137; 144, 145), associés à la troisième paire d'éléments redresseurs (28, 29; 36, 37; 44, 45), sont ouverts, les commutateurs ouverts (128, 129; 136, 137; 144, 145) et les éléments redresseurs (28, 29; 36, 37; 44, 45) y associés de chaque circuit redresseur (20, 30, 40) étant associés à un conducteur (12, 13, 14) différent de la source (15) de courant multiphasé, et qu'en cas de défaillance d'une des phases (R, S, T) de la source (15) de courant multiphasé, tous les commutateurs ouverts en cas d'absence de dérangements (128, 129; 136, 137; 144, 145) sont fermés pour la durée de ladite défaillance.

14. Procédé selon la revendication 13, caractérisé en ce qu'en cas de défaillance d'une des phases (R, S, T), les commutateurs associés à celui des conducteurs (12, 13, 14) qui correspond à la phase défaillante (R, S, T) sont ouverts additionnellement.

15. Procédé selon la revendication 13, caractérisé en ce qu'en cas de défaillance d'une des unités de correction du facteur de puissance monophasées (21, 31, 41), tous les commutateurs (124-129; 134-139; 144-149) du circuit redresseur (20, 30, 40) qui précède l'unité de correction du facteur de puissance (21, 31, 41) défaillante sont ouverts pour la durée de ladite défaillance.
